# EUROPEAN PATENT APPLICATION

(11) **EP 1 516 846 A2**
(43) Date of publication of application: **23.03.2005**
(21) Application number: 04381036.5
(22) Date of filing: 20.09.2004
(51) Int. Cl.: B66B 9/187

(54) **Lifting device for lifting persons along the shaft of a wind generator.**

(30) Priority: 19.09.2003 ES 200302187
(71) Applicant: PERI, S.A. Sociedad Unipersonal, 28110 Algete (Madrid) (ES)
(72) Inventor: Mejias Montes, Francisco Javier, 28110, ALGETE (Madrid) (ES); Rodriquez Fernandez, Ricardo, 28110, ALGETE (Madrid) (ES); Reyes Valverde, Antonio, 28110, ALGETE (Madrid) (ES)
(74) Representative: Urizar Anasagasti, Jesus Maria

(57) **Abstract**

A lifting device for lifting persons along the shaft of a wind generator, comprising a platform (1) provided with outer railings, suspended from cables (11) hanging from the generator (4) in which synchronized drive means (5) are incorporated which vertically move the platform, keeping it stabilized in the horizontal position, comprising a platform which defines a horizontal surface, perpendicularly facing the axis of the shaft (2) of the wind generator, provided in the central portion with a window or opening, likewise protected by a perimetral railing, through which the blade (3) passes when it is situated at an upper position of the shaft (2) during maintenance or repair operations; said platform (1) comprising: a) a guide profile (6) on the side facing the shaft and in a vertical plane, which profile defines a lower support on said shaft (2); b) at an upper position, at the same level as the platform (1) or above it, support means (13) and/or coupling or anchoring means (12) for anchoring to the shaft, and c) to the side of the shaft (2), respective arms (7) pressing against it, horizontally stabilizing the platform (1).

## Description

### Object Of The Invention

The number of wind apparatuses generating electric power has very rapidly increased in recent years. Although these apparatuses require little maintenance, they are not free from repairs, periodical revisions, or cleaning tasks, which leads to the need to access any point of the shaft, of the generator and of the blades of the generator, to be able to carry out these tasks.

The present invention refers to a lifting device for lifting persons along the shaft of a wind generator to carry out maintenance or repair operations in any portion thereof. This device comprises a horizontal platform provided with exterior railings, suspended from cables hanging from the generator in which it incorporates synchronized motor means which allow for carrying out a vertical movement, keeping it stabilized in a horizontal position.

### Background Of The Invention

There are currently few references in the art about apparatuses or devices for moving along the height of or around the shaft of wind generators, repair and maintenance tasks usually being carried out by means of a crane assembled on a vehicle, which implies a high cost and problems of mobility around the shaft in some installations due to possible irregularities of the terrain; nevertheless the following documents are known which, in some manner, try to solve this drawback:
Document EP0868389 refers to a method and apparatus for raising a load to a tower, specifically a generator, and placing it on an upper platform, consisting of a crane and mechanisms allowing for suitably orienting the generator in the target position.
Document ES U9901889 refers to an apparatus for lifting persons on the inside of the shaft of a wind generator, consisting of a platform which through a bearing column by way of a stairway fixed on one of the generatrices of the shaft, having a rack in which a pinion is coupled, bringing bout the vertical movement of the platform, logically along the generatrix on which this column is assembled. This structure is fixed inside the shaft of the wind generator and, as a result, does not allow for checking it or cleaning it outside, nor is there access to the blades of the wind generator whereby their repair or cleaning is also not possible.
Document ES P200001500 refers to an elevator for wind towers similar to the previous in terms of the requirement of a fixed structure inside the shaft and the impossibility of checking or cleaning both the blades and the outer surface of the shaft; in this case, actuation is carried out by cables fixed at the upper portion of the generator.
Document ES P200102444 refers to a scaffolding for going up along shaft of a variable section, comprising a circular central body of variable section which is adjusted to the diameter of the shaft by means of retractable steps in which a locking can be carried out in any position. This scaffolding requires a prior assembly around the shaft and has serious drawbacks with regard to horizontal stability since three motors are used for its lifting, one of said motors assembled on one end of the base of the generator and two on the opposite end, adopting in a plan view an arrangement according a base isosceles triangle with a very small length which corresponds to the width of the generator, the reason for which it swings sideways during its use and when lowering, whereby constant blockages occur due to the locking of retractable steps on the shaft.

### Description Of The Invention

In the device of the present invention said platform defines a horizontal surface, which perpendicularly faces the axis of the shaft of the wind generator and is provided in the central portion with a window or opening, likewise protected by a perimetral railing, through which the blade passes when it is situated in an upper position of the shaft during maintenance or repair operations. Said platform comprises several support elements and, when necessary, elements for fixing or coupling the platform in the shaft, which allow for keeping it completely horizontal, both in the longitudinal and the transverse direction; said elements are the following: on the side facing the shaft and in a vertical plane, a guide profile defining a lower support on said shaft; in an upper position, at the same level as the platform or above it, support means and/or coupling or anchoring means for anchoring to the shaft, and to the side of the shaft, respective arms pressing against it, horizontally stabilizing the platform.

Said linking or anchoring means for anchoring the platform to the shaft, existing on the side facing it, are located in the upper portion, at the height of the railing of said platform, and are constituted of permanent magnets or, when necessary, electromagnets and another mechanical linking means, such as suction pads adhered to the shaft.

All the supports of the platform on the shaft, both the direct support above the height of the anchoring means, and the lower guide profile and the side arms resting against the shaft, are constituted of rollers which facilitate the movement of the assembly along or around it.

The side supports resting against the shaft internally have a tension spring inwardly pulling on them, keeping them in contact with the shaft regardless of the diameter thereof, or the height at which the platform is situated at a given time.

The lifting motors are fixed directly on the platform in respective side points separated from the shaft by a distance suitable for balancing the weight of the platform, or through respective side rocker arms laterally hinged on the platform in two points sufficiently separated so as to produce a distribution of loads, keeping it stable in the horizontal position, regardless of the position of the operators. The side motion around the shaft is achieved by rotating the generator to which the cables are fixed.

The structure of this device weighs little, enabling its transport by means of a small trailer vehicle, the inclusion or fixing of wheels such that it can be autotransported. The operation set-up time is short, since it is sufficient to simply situate it to the side of the shaft and connect the cables on the motors so that the device is operative. The reliability of the system is assured since it has practically no moving parts; in the same manner, stability is also assured since it does not swing in any direction. It is a universal device which adapts to any type of shaft.

### Description of the Drawings

To complement the description being made and for the purpose of better understanding the features of the invention, a set of drawings is attached to the present specification in which, with an illustrative and non-limiting character, the following is shown:

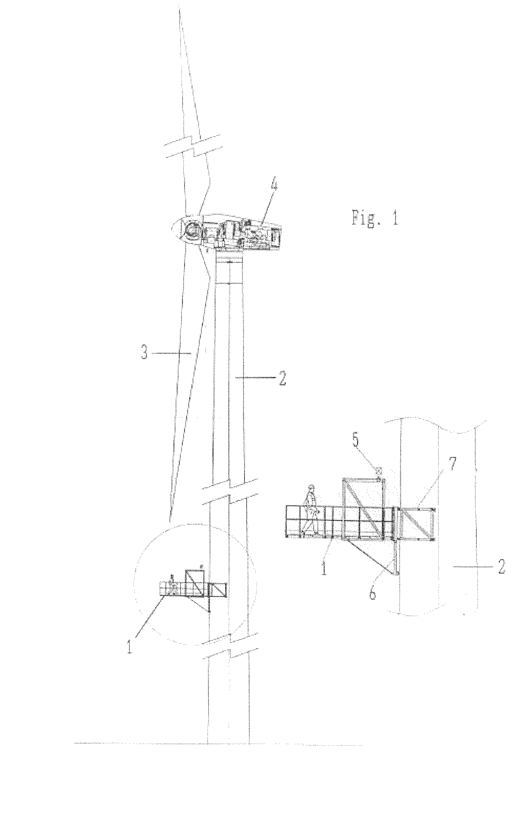

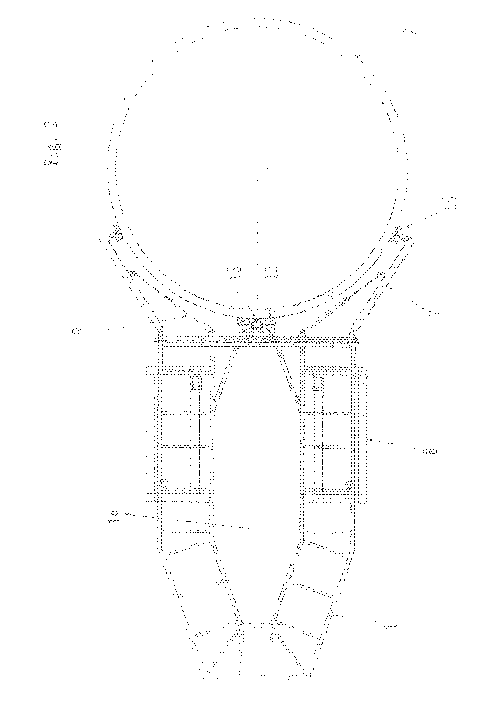

Figure 1 shows an elevational view of a wind generator with the device of the present invention situated at the lower area.

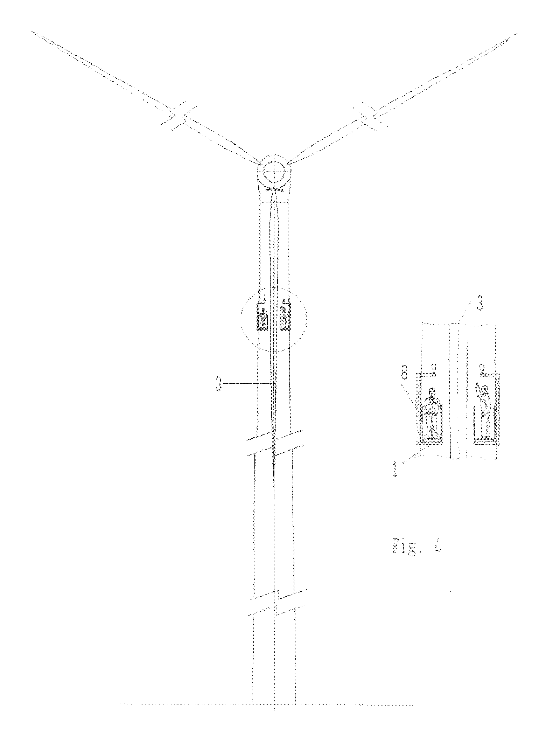

Figures 2 and 3 respectively show plan and elevational views of the device of the present invention situated in the operative position on the lower area of the shaft of a wind generator.
Figure 4 shows a front elevational view of a wind generator with the device of the present invention situated in the upper area of its shaft.
Figure 5 shows a plan view of the device herein proposed when it is situated at an upper position of the shaft, carrying out repair or cleaning tasks in one of the blades of the generator.

### Preferred Embodiment of the Invention

As can be seen in the mentioned figures, the device of the present invention allows for lifting persons along the shaft (2) of a wind generator apparatus of the type comprising an electric generator (4) at an upper position of a frustoconical shaft, which generator moves by virtue of several blades (3) assembled on a horizontal axis. The device of the present invention comprises a platform (1) which is suspended from cables (11) hanging from the generator (4), or the lower platform supporting it, in the front area or at the side on which its blades (3) are located, in order to be able to situate the platform (1) at a given time around one of the blades (3), the one placed in a downward vertical position at that instant for its repair or cleaning.

This platform (1) has a body of a notably rectangular configuration, with a flat floor peripherally protected by means of a railing and provided in the central portion with an opening or window (14), likewise protected by a peripheral railing, through which one of the blades (3) of the generator can pass entirely when it is positioned vertically and downwards, parallel to the shaft (2), in the repair position. This platform (1) has several means of linking or support on the shaft (2) to allow for its positioning at all times on a horizontal plan, in both the longitudinal and transverse direction. Maintenance of the horizontal plane in the transverse direction is effected by the lifting motors (5) themselves for lifting said platform which, following a lifting system used in another type of structures, are synchronized with one another and enable carrying out unison motion with a correction system such that it maintains the two sides of the platform constantly at the same level. To keep the platform in the horizontal position in the longitudinal direction, it is necessary to keep it permanently supported against the shaft (2) at two points situated at a different height, a lower point through the guide profile (6) running downwards in extension of the front face of the platform facing the shaft (2), and an upper point, preferably at the same level of the platform (1) above it, constituted of the supports (13).

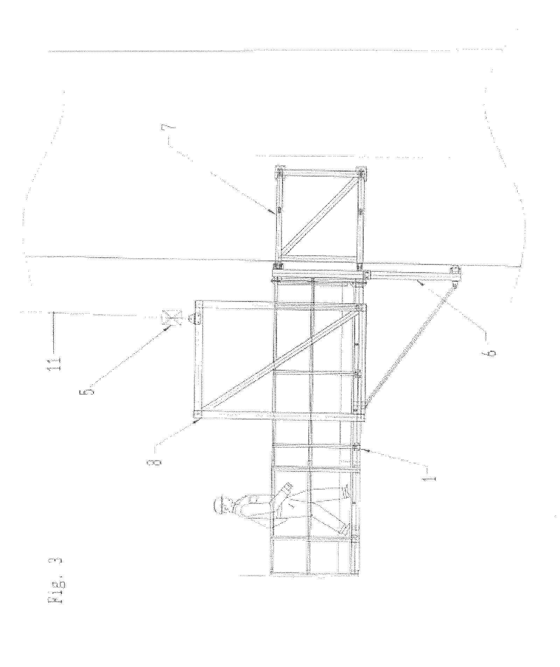

Likewise, to stabilize the platform (1) horizontally, respective side arms (7) rest against the shaft (2), which arms have tension springs (9) inwardly pulling on them, keeping them permanently in contact with the shaft (2) regardless of the diameter thereof, which varies depending on the height at which the platform is situated at a given time, as can be seen upon comparing Figures 2 and 5.

All these supports are constituted of rollers (10), which enable easy sliding, supported on the shaft (2) both when the platform moves vertically or if it rotates around the shaft (2). These rollers are assembled both on the end of the side arms (7) and on the lower guide profile (6), or on the supports (13) located on the lower portion of the platform.

Fixing or anchoring means are arranged at the upper and central portion of the platform (1), on the side facing the shaft (2), for fixing or anchoring said platform to the shaft (2), said means constituted of respective permanent magnets (12) which, given the metallic nature of said shaft, enable immobilization or permanent contact of the platform with this element, regardless of what position the operators are in on the platform (1). Support (13), situated between the permanent magnets (12), preferably has a mechanism which enables slightly moving them for when a movement of the platform occurs, to slightly release the permanent magnets (12) from the shaft (2), and to thus facilitate its mobility in both the vertical and lateral direction.

The drive motors (5) of the platform are fixed on it directly or in respective side points, situated at precalculated distance from the shaft (2), such that it enables maintenance thereof in the horizontal position. In the figures, the fixing of the respective motors (5) is carried out through rocker arms (8) which are hinged on the sides of the platform at two points sufficiently spaced apart so as to cause the distribution of loads that keep it in the stable horizontal position regardless of the position in which the operators are located and which, given the mobility of the coupling of the motor (5) on the rocker arm (8), bringing it closer or farther from the shaft (2) to a greater extent until determining the appropriate distance, this position can either be kept fixed or it can be varied, according to the dimensions of the shaft or of the area thereof where the platform is located at a given time.

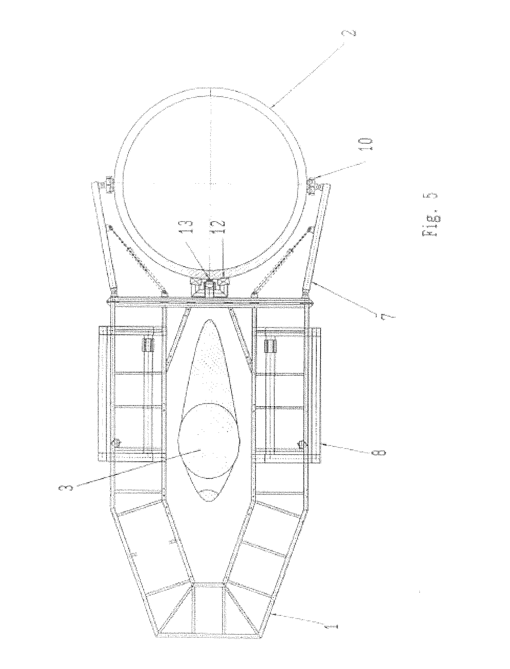

The mobility of this platform is carried out by means of two cables fixed on the upper structure of the shaft (2) on which structure the generator (4) is assembled, and to carry out maintenance or repair operations, it is lifted until reaching the appropriate height; when carrying out a repair or another type of operation on one of the blades (3) is involved, the latter is situated vertically downwards, as seen in Figure 4, and the platform (1) is lifted until said blade (3) is inside the window (14) that the interior platform has, such that the operators can be located on both sides of this blade, having access to any point thereof; to carry out any operation at another point of the shaft, it is enough to simply turn the upper portion of the structure on which the generator (4) is assembled until placing the platform on the generatrix of the shaft which is to be accessed, and, either subsequently or beforehand, place the platform at the appropriate height.

The platform (1) has means for the upwards bending of the guide profile (6) and has dimensions making it suitable for highway autotransport.

Having sufficiently described the nature of the invention as well as a preferred embodiment example, it is hereby stated for due purposes that the materials, shape, size and arrangement of the elements described may be modified, as long as this implies no alteration of the essential features of the invention which is claimed below:

## Claims

1. A lifting device for lifting persons along the shaft of a wind generator, comprising a platform (1) provided with outer railings, suspended from cables (11) hanging from the generator, in which synchronized drive means (5) are incorporated which vertically move it, keeping it stabilized in the horizontal position, **characterized in that** said platform (1) defines a horizontal surface, perpendicularly facing the axis of the shaft (2) of the wind generator, provided in the central portion with a window or opening, likewise protected by a perimetral railing, through which the blade (3) passes when it is situated in an upper position of the shaft (2) during the maintenance or repair operations; said platform (1) comprising: a) a guide profile (6) on the side facing the shaft and in a vertical plane, which profile defines a lower support on said shaft (2); b) at an upper position, at the same level as the platform (1) or above it, support means (13) and/or coupling or anchoring means (12) for anchoring to the shaft, and c) to the side of the shaft (2), respective arms (7) pressing against it, horizontally stabilizing the platform (1).

2. A device according to the previous claim, **characterized in that** the anchoring or linking means for anchoring the platform (1) to the shaft (2) existing on the side facing the latter are situated on the upper portion at the height of the railing of said platform and are formed by magnetic elements, preferably constituted of permanent magnets.

3. A device according to the previous claims, **characterized in that** the upper support means (13) of the platform, of the guide profile (6) and of the side arms (7) resting against the shaft (2) are constituted of rollers or skids facilitating the movement of the assembly along or around the shaft, which is achieved by turning the generator on which the cables are fixed.

4. A device according to the previous claims, **characterized in that** the side supports (7) resting against the shaft (2) internally have a tension spring (9) inwardly pulling on them, keeping them in contact with the shaft (2) regardless of the diameter thereof, or of the height at which the platform is situated at a given time.

5. A device according to the previous claims, **characterized in that** the lifting motors are fixed directly on the platform (1) at respective side points spaced from the shaft at a distance suitable for balancing the weight of the platform, or through respective side rocker arms (8) laterally hinged on the platform at two points sufficiently spaced from one another so as to produce a distribution of loads keeping it stable in the horizontal position, regardless of the position of the operators.

6. A device according to the previous claims, **characterized in that** the platform (1) has upward folding means for folding the guide profile (6) and it has dimensions suitable for highway autotransport.
